# EUROPEAN PATENT APPLICATION

(11) **EP 1 500 955 A1**
(43) Date of publication of application: **26.01.2005**
(21) Application number: 04254395.9
(22) Date of filing: 23.07.2004
(51) Int. Cl.: G01V 8/20, F16P 3/14, A47B 53/02, A47B 63/06

(54) **Safety mechanism**

(30) Priority: 24.07.2003 GB 0317351
(71) Applicant: Spaceace Limited, Pontypridd, Mid. Glamorgan CF37 1DL (GB)
(72) Inventor: Stott, Mark Anthony, Newport, Gwent NP19 0DR (GB); Morris, Martin, Mid Glamorgan CF72 8SH (GB)
(74) Representative: Pearson, James Ginn

(57) **Abstract**

The invention relates to an item of furniture (1) with a safety mechanism to reduce the chance of injury to the user as a result of one part of the furniture being moved relative to another part of the furniture. The mechanism comprises spaced apart sources of electromagnetic radiation (8), detectors of electromagnetic radiation (9) and a control unit (5), wherein each source is associated with a detector (9), at least one of the sources (8) is associated with a plurality of the detectors (9), at least one of the detectors (9) is associated with a plurality of the sources (8). The control unit (5) is arranged to receive signals from the detectors (9), whereby the detectors (9) are configured to detect when an object is blocking the path between associated sources (8) and detectors (9), and the control unit (5) arranged to stop the movement of said one part of furniture with respect to said other part of furniture should an object be detected.

## Description

The present invention relates to a safety mechanism. In particular the present invention relates to a safety mechanism suitable for use in an item of furniture for reducing the chance of injury to a user as a result of one part of the furniture being moved relative to another part of the furniture. The present invention also relates to subject matter associated with such a safety mechanism and the use thereof. Such subject matter includes for example an item of furniture including such a safety mechanism and to a method of detecting the presence of an object within a region.

A problem that the invention seeks to mitigate relates to the danger of a person trapping a part of his/her hand between a part of an item of furniture that moves relative to another part. Such an item of furniture might for example include a shutter that moves, by means of a electric motor, to cover an aperture. At the time at which the shutter has almost fully closed the aperture there may be a risk of the user accidentally inserting a finger into the narrow gap between shutter and the part of the furniture that defines the aperture. Also, there may be a risk of the hand of the user being pushed or dragged by the shutter during its passage from the fully open position to the closed position. It would therefore be beneficial for there to be a means for detecting the presence of an object in a region at or near a location where injury might occur. It would of course be beneficial to detect objects other than the user's hand, as the insertion of a rigid object between parts of an item of furniture that move towards each other might cause damage to either or both of the part of the furniture and/or also to the drive mechanism.

It is an object of the present invention to provide a means that is able to reduce the risk of injury to the user as a result of one part of the furniture moving relative to another part.

The present invention provides an item of furniture including a safety mechanism for reducing the chance of injury to a user as a result of one part of the furniture being moved relative to another part of the furniture, the safety mechanism comprising:
i) a multiplicity of spaced-apart sources of electromagnetic radiation,
ii) a multiplicity of spaced-apart detectors, and
iii) a control unit, wherein each source is associated with a detector,
at least one of the sources is associated with a plurality of the detectors,
at least one of the detectors is associated with a plurality of the sources,
the detectors are so arranged and configured that each detector is in use able to detect electromagnetic radiation from each of the sources with which the detector is associated,
the control unit is arranged to receive signals from the detectors, the signals depending on the electromagnetic radiation received by each detector from each of the sources with which the detector is associated,
the control unit is arranged to stop movement of the said one part of the furniture relative to said another part of the furniture in the event that the control unit detects that electromagnetic radiation sent from a source to a detector associated with the source is prevented from reaching the detector, the reduced level of radiation received being sufficient to indicate the presence of an object.

The region that the safety mechanism is arranged to monitor is advantageously so shaped and positioned that a part of the user would need (during normal operation of the item of furniture and without dismantling the furniture or any part thereof) to enter the region in order for any part of the user to reach an area in which injury could be caused as a result of said one part of the furniture being moved relative to another part of the furniture. As such the present invention is able to reduce the risk of injury to the user of the item of furniture.

The present invention has particular advantage over a less sophisticated safety mechanism (which may or may not be prior art) in which pairs of sources and detectors are arranged either side of a region to be monitored (there effectively being formed parallel light beams the obstruction of any of which causing the movement of parts to be stopped) in that the number of sources and detectors required by the present invention in order to adequately monitor a given region for objects of a given size is less. Also, the parallel beams proposal might be unable to detect thin generally planar objects, if the plane of the object is parallel to the beams and perpendicular to the region monitored by the beams (a problem mitigated by the present invention).

It is acknowledged that movement detection systems comprising a plurality of sources and a plurality of detectors (such systems being more sophisticated than the parallel beam proposal mentioned above) were known in the public domain before 24th July 2003. However such systems were typically used in technical fields remote from that of furniture design. One such movement detection system, described in US 5,149,921, relates to a self-correcting infrared intrusion detection system for a lift (or elevator). A plurality of spaced-apart transmitter stations mounted vertically apart in one door of the lift faces a plurality of spaced-apart receiver stations mounted in the opposite door. The transmitter stations periodically radiate modulated, non-coherent infrared light toward the opposite sliding door. The light travelling from the transmitter stations to the receiver stations may be considered as forming a network of separate beams. A control circuit controls the transmitters, monitors the receivers, and executes the software that enables the system to detect passengers and to adjust for environmental changes. Thus, when a passenger enters the monitored region between the lift doors, one or more beams are interrupted, and the system prevents further closure of the doors to prevent injurious door contact with the passenger. The system is thus able to differentiate between intrusions and malfunctions and adjusts itself automatically when hardware partially fails in the absence of an intrusion.

Many other advantageous features are made possible by means of the present invention as is explained in further detail below.

It will be appreciated that the minimum size of object that the safety mechanism is able to detect will depend on the arrangement of the safety mechanism. The region monitored by the safety mechanism may have areas that are more sensitive than others to the presence of an object of a given size.

The safety mechanism is arranged to monitor a region for the presence of an object, the region being divided into a plurality of zones, the safety mechanism being so arranged that the minimum size of an object that the safety mechanism is configured to detect is different in different zones.

A more sensitive zone may for example be advantageously positioned so that it coincides with a region in or near which there is a greater risk of injury to the user. For example, there may be a risk of the user trapping a finger between the two moving parts of the furniture and a more sensitive zone may therefore be provided to monitor for objects (such as a finger) being inserted into the region at which the two moving parts close against each other.

The safety mechanism is preferably sensitive enough to detect when a child's finger is inserted at any point within a substantial portion of the region monitored by the safety mechanism.

The safety mechanism may be so arranged that there is a first zone in which the minimum size of an object that the safety mechanism is configured to detect is less than 10mm. The two parts that move relative to each other may be arranged to be moveable between an open position in which the parts are spaced apart to a closed position in which a portion of one of the two parts is directly adjacent to or touching a portion of the other of the two parts. For example, one part may be a moving shutter and the other part may be the frame defining the aperture that the shutter closes, the shutter possibly closing the aperture by sliding over the surface of the frame. The first (more sensitive) zone is preferably positioned in the region of the area between said portions of the respective two parts in the closed position. For example, the first zone may be positioned in the region at which the two parts close against each other. There may be a second zone in which the minimum size of an object that the safety mechanism is configured to detect is greater than 20mm.

The safety mechanism may be configured to be able to detect the passage of an opaque cylindrical object having a length of 4mm and a diameter of 4mm from passing through any part of a substantial portion of the region monitored by the safety mechanism.

The safety mechanism may be configured to be able to detect the passage of an opaque cylindrical object having a length of 4mm and a diameter of 12mm from passing through any part of a substantial portion of the region monitored by the safety mechanism.

The region that the safety mechanism is arranged to monitor may be generally planar. The region that the safety mechanism is arranged to monitor could of course cover nonplanar space.

The detectors may be arranged in one column (or row) and the sources arranged in another spaced apart column (or row) so that the detectors face the sources. In the case where the region is generally rectangular and planar in shape, the sources and detectors may be arranged linearly along opposite sides of the region. The detectors and sources may be arranged on all sides of the rectangular region.

Each of a plurality of the sources may be associated with a plurality of the detectors. Each of a plurality of the detectors may be associated with a plurality of the sources. The majority of the sources may be associated with at least three of the detectors. The majority of the detectors may be associated with at least three of the sources. It may be the case that some of the sources are associated with only a single detector and/or that some of the detectors are associated with only a single source. There may of course be further sources and/or detectors that are not associated with the safety mechanism.

Preferably, there are at least four detectors and the distance between respective pairs of adjacent detectors is different for at least three such pairs. Preferably, there are at least four sources and the distance between respective pairs of adjacent sources is different for at least three such pairs. If the sources and detectors are arranged linearly with a uniform mounting pitch, some of the notional paths connecting a source and associated detector will have points of redundancy. If however the mounting points are deviated somewhat from a regular pattern then such redundancy is reduced. Therefore a finer set of detection path scan be employed. In addition, the sources and/or detectors may be preferentially located at particular sections of the aperture such as the edges so as to optimise the size of the minimum detectable object in those regions.

Preferably, there are at least eight detectors and at least eight sources. Preferably, the total number of pairs of sources and associated detectors is greater than three times the number of sources. Preferably, the total number of pairs of sources and associated detectors is greater than three times the number of detectors. The number of sources may be unequal to the number of detectors.

The control unit may be arranged to activate a warning means, for example in the form of a means that can be sensed by the user by means of sight, hearing and/or touch, in the event that the control unit detects the presence of an object, in addition to stopping the movement of the said one part of the furniture relative to said another part of the furniture. Preferably, the warning means is such that the warning can be sensed with all of sight, hearing and touch. The control unit is preferably arranged to sound an audible warning alarm, for example in the form of a bell or a buzzer, in the event that the control unit detects the presence of an object. The control unit is preferably arranged to activate a visible warning alarm, for example in the form of a flashing light, in the event that the control unit detects the presence of an object. The control unit is preferably arranged to activate a moving part, for example in the form of a pivoting arm, which touches the user in a safe manner to alert the user to the fact that the control unit has detected the presence of an object.

The signals received or processed by the control unit may be in the form of binary digital signals, merely indicating whether or not the radiation received by a detector is sufficiently high enough for the control unit to be able to decide that an object is not preventing radiation sent from a source to a detector from reaching that detector. The control unit may for example receive a "high" (binary 1) signal if the radiation received by a detector from a source is above a preset threshold and a "low" (binary 0) signal if the radiation received by the detector is below that preset threshold. In the case, where the control unit receives a "low" (binary 0) signal, the control unit decides that electromagnetic radiation sent from a source to a detector associated with the source has been prevented from reaching the detector and that the reduced level of radiation received is sufficient to indicate the presence of an object.

It is preferred however that the control unit receives signals indicating the level of intensity of the radiation received by the detectors. The signal may for example be an analogue signal or may for example be a digitised signal able to differentiate between a multiplicity of different levels of intensity of radiation received by the detector.

In the case where the control unit is able to discern between different levels of radiation received by the detectors, the control unit may be arranged to stop movement of the said one part of the furniture relative to said another part of the furniture in the event that the control unit detects that a reduced level of radiation is received by a detector, by means of some of the radiation sent from a source to a detector associated with the source is prevented from reaching the detector. The detector may need to detect radiation above a preset threshold level in order for the control unit to decide that there is not an object preventing radiation from reaching the detector from the source.

In the case where the control unit is able to discern between different levels of radiation received by the detectors, the control unit may be so arranged that in the event that one or more detectors consistently detect radiation within a predetermined range of intensities the control unit outputs a signal, that in use causes the user of the item of furniture to be alerted to the reduced signal level. The reduced signal level may be indicative of the sources and/or the detectors being dirty. The range of intensities may for example depend on a level of intensity previously ascertained during a calibration procedure. For example, and as described in further detail below, individual source and detector pairs may be calibrated such that the signal strength the detector receives during calibration is set as 100% signal strength. The range of intensities judged to be low enough to warrant further investigation or cleaning, but not so low as to cause the control unit to assume a foreign object is present, may for example be a range of between 65% and 80% of the intensity calibrated as 100%. The signal outputted by the control unit, and/or the means of alerting the user to the reduced signal level may be considered as a "clean me" signal. Providing such a "clean me" signal may be of particular advantage when the item of furniture is used in a domestic or office setting, or is in the form of mobile item of furniture, where the item of furniture is susceptible to dust and dirt.

Advantageously, each pair of source and associated detector is individually calibrated to account for the variation, due to the position of the detector with respect to the source, between the different pairs, of the level of radiation received from the source at the detector. It may be a feature of the source and detector pairs that the signal strength received by the detector depends on the position of the detector relative to the central axis, or plane, of the radiation emitted from the source. For example, a detector positioned, on the centreline of the source, opposite to and facing a source may receive a signal from the source having a strength greater than a detector located above or below the centreline of the source, say, for example, 10° below the centreline.

Advantageously, individual source and detector pairs are calibrated such that the signal strength the detector receives during calibration is set as 100% signal strength thus compensating for signal strength degradation as the distance from the centreline increases. Thus the absolute level of radiation received by a detector in a source-detector pair corresponding to 100% signal strength may differ from pair to pair and for example between pairs having a detector or a source in common. Advantageously, the source-detector pairs are calibrated during installation of the item of furniture by switching the unit into a calibration mode. Once the calibration is complete, the item of furniture may be switched from the calibration mode and used by the user as normal.

The control unit is preferably so arranged that in the event that it detects reduced radiation being emitted by a source or received by a detector without a corresponding reduction in radiation being received by other detectors and/or sources the control unit outputs a signal, that in use causes the user of the item of furniture to be alerted to the reduced signal level. In the case where the intensity of radiation received by a detector from a source is required to fall below a given threshold before the control unit assumes a foreign object is present, the threshold in respect of a given source-detector pair may conveniently be set as a fixed percentage of the normal level of radiation received as measured during a calibration process. The threshold may for example be 65% of the value calibrated as 100%. The threshold set may alternatively be different for one or more source-detector pairs, for example, so that certain pairs have higher sensitivity than others. Such individual threshold levels may be pre-set, set in the factory and/or set during calibration.

The control unit may be so arranged that in the event that it detects no radiation being emitted by a source or being received by a detector without a corresponding reduction in radiation being received by other detectors and/or sources the control unit outputs a signal alerting the user to the reduced signal level. The reduced signal level may be indicative of one of the sources and/or the detectors being faulty.

It is mentioned above that the user may be alerted to a reduced signal level in one or more sources/detectors. There may be provided an indicating means, for example a visual indicator or an audible sound or message, that indicates to the user that an appropriate form of action should be taken. The action to be taken may for example be in the form of one or more of the following actions: cleaning, repairing and replacing.

The sources are preferably controlled by the control unit.

The sources are preferably caused to emit radiation such that for each detector only one of the sources of radiation associated with the detector emits radiation at a time. The sources may for example be activated one at a time.
The duration of activation of at least one of the sources may be longer than the duration of activation of at least one other of the sources. For example, if each source is activated for a length of time sufficient to allow sequential activation of each detector and the time between activating one detector and activating the next is a fixed period of time, the duration of activation of the source will vary depending on the number of detectors with which it is associated.

The duration of activation of at least one of the detectors may be longer than the duration of activation of at least one other of the detectors. This may be the case, where each detector is activated for a length of time sufficient to allow activation of each source and the time between activating one source and activating the next is a fixed period of time.

The detectors associated with a single source may be activated simultaneously.

It will be understood that a detector may be considered as being activated if during the period of activation the control unit ascertains an indication of the level of radiation received by that detector. If the detector is for example in the form of a device that includes a component that needs to be biased by a potential difference in order for the detector to perform its function, then it will be necessary (although not sufficient) in order for the detector to be activated for the component to be so biased. It will be understood that a source may be considered as being activated if during the period of activation the source is caused to emit radiation for detection by at least one detector.

The detectors may be arranged such that they only send a signal to the control unit in the event that no radiation is received when expected. It is preferred however that the control unit requires a non-zero signal, for example, a reduction to below 65% of a signal calibrated as 100%, from the detector as a result of the activation of the detector in order for the control unit to decide that there is not a reduced level of radiation sufficient to indicate the presence of an object.

The time during which each source is activated per detector is preferably less than 1 millisecond and preferably greater than 1 microsecond. More preferably, the time during which each source is activated per detector is between 50 microseconds and 500 microseconds.

The control unit may be arranged such that during operation a source is activated and then the or each detector associated with that source is activated before the control unit deactivates that source and activates a further source.

The control unit may be arranged such that during operation a detector is activated and then the or each source associated with that detector is activated before the control unit deactivates that detector and activates a further detector.

The control unit and sources may be arranged to emit radiation that is modulated, preferably at a frequency greater than 1kHz. The control unit and sources are preferably arranged such that the safety mechanism can in use discern between the modulated radiation emitted from the sources of the safety mechanism and radiation from other sources that are not so modulated. The frequency of modulation is preferably above 10kHz. More preferably the frequency of modulation is at least about 100kHz.

Thus the use of modulated radiation at sufficiently high frequencies enables greatly improved performance in that the detectors can effectively reject stray light from room or other optical light sources, such as steady state sources, for example incandescent lights or sunlight, or other modulated light sources, for example from fluorescent or plasma emission lamps.

The sources may all be configured to emit electromagnetic radiation having broadly the same wavelength/intensity profile. The detectors may each be able to detect radiation having a wavelength equal to one of the wavelengths of radiation emitted by each source.

The sources are preferably configured to emit light, which may or may not include light in the visible spectrum. The sources are preferably configured to emit radiation of wavelengths predominantly in the infra-red spectrum. The range of wavelengths of radiation emitted by the source may for example range from 900 to 950nm.

The sources are preferably in the form of light emitting diode devices (LEDs). The detectors are preferably in the form of photo-sensitive diode devices (photo-diodes for example). The sources may be in the form of laser devices.

A source and associated detector do not need to be mounted opposite, or facing, each other. The safety mechanism may include a reflective surface arranged to allow radiation emitted by a source to be received at a detector by means of reflection off the reflective surface. For example, a source and associated detector could be mounted side by side, wherein radiation from the source may in use be received by the detector via the reflective surface. The reflective surface may for example be a mirror.

The safety mechanism may include one or more proximity sensors such as for example passive infra-red (P.I.R.) detectors. Such proximity detectors may for example be mounted to monitor regions where injury is most likely to occur in order to supplement the monitoring provided by the arrangement of sources and detectors.

In the case where one part is a moving shutter and the other part defines an aperture that the shutter closes, the safety mechanism may include one or more proximity sensors that are mounted along the top and/or bottom of the aperture where shear and finger trap is possible.

Each source is preferably arranged to emit radiation that spreads in at least one plane at an angle of at least 15 degrees, more preferably at an angle of more than 25 degrees. Each source is preferably arranged to emit radiation that is confined in at least one plane to spread at an angle of at less than 10 degrees, more preferably at an angle of less than 5 degrees. Advantageously, each source is arranged to emit radiation that spreads in a first plane at an angle of at least 15 degrees (more preferably at an angle of more than 25 degrees) and is confined in a second plane, transverse to the first to spread at an angle of at less than 10 degrees (more preferably at an angle of less than 5 degrees). In the case where the detectors are arranged generally linearly the first plane may for example be generally aligned with the plane that best fits the notional straight line paths between the detectors and the source with which they are associated. In the case where the detectors are arranged generally linearly, the second plane may for example be the plane that is both perpendicular to the first plane and perpendicular to the line that best fits the locations of the detectors associated with the source. The angle of spread of the radiation of a source and/or the field of view of a detector is preferably narrower for source/detector pairs in which the distance between detector and source is relatively long. If the there is a significant distance between a detector and a source, there may need to be collimation of the radiation between the detector and the source.

Preferably, each source and each detector are positioned behind material that is transparent at the wavelengths of radiation to be transmitted from the source for detection by the detector. The transparent material may for example protect the front face of the detector/source. The transparent material may form at least part of a lens, or lens system. It will be understood that the front face of the detector will be that part of the detector that is arranged to receive radiation from the sources with which it is associated and that similarly the front face of a source will be that part of the source that is arranged to send radiation to the detectors with which it is associated. The front face need not therefore be planar or symmetrical. It will also be understood that when an object is stated to be in front of or behind a detector/source then the position is that relative to the front face of the source/detector. Each detector/source may be encased in material to prevent tampering. Of course if the detector/source is encased in protective material, only the regions which would otherwise block radiation from passing from a source to an associated detector need be transparent to the radiation. Preferably, the thickness of the transparent material in front of the detector/source is greater than 10mm. Having the sources/detectors set back behind transparent material in this way reduces the chance of all the radiation to or from, respectively, a single detector only or a single source only being blocked. Preferably, the sources/detectors are set back away from the region to be monitored, to enable the region to be covered adequately.

The control unit may be in the form of a microprocessor. For example, the microprocessor may be in the form of a bespoke chip or in the form of a suitably programmed pre-programmable chip.

The control unit may be arranged such that in order for the control unit to decide that a reduced level of radiation received by a detector is sufficient to indicate the presence of an object, the control unit must detect a reduced level of radiation on two successive occasions within successive periods, the periods being separated in time.

The separation in time may be significantly longer than the sum of the duration of a single activation of the source with which the detector is associated and the duration of a single activation of the detector.

Preferably the control unit performs a complete scan within a period less than 100 milliseconds, more preferably less than 50 milliseconds. The control may for example be arranged to perform a complete scan at a frequency of greater than 10Hz, that is more than once every 100 milliseconds. A complete scan of all of the detectors is completed once the control unit has ascertained whether radiation is being received by every detector in respect of every source with which it is associated. If there are N detectors each associated with an average of M sources, and the activation time of each detector-source pair is T, this period is likely to be of the order of the product NMT. Performing a complete scan many times a second allows the safety mechanism to react to an object being inserted into the region relatively quickly compared to the likely speed of the moving part of the item of furniture and the likely speed of the object being inserted. Preferably, the scan time is less than D / S, where D is preferably less than 1mm and more preferably less than 0.5mm and S is the maximum possible value of the speed, under normal operating conditions, of said part relative to said another part. Preferably, the maximum possible value of the speed, under normal operating conditions, of said part relative to said another part is limited to be less than D / T_{S}, where D is preferably less than 1mm and more preferably less than 0.5mm and T_{S} is the scan time.

Preferably, the item of furniture is so arranged that the maximum distance the parts travel relative to each other, under normal operating conditions, in the event that the control unit stops the relative movement of the parts on detection of the presence of an object is less than 1mm and more preferably less than 0.5mm.

It is within the scope of the present invention for more than one source to be operated at a time. For example, if first and second sources are associated with first and second respective sets of detectors, such that the radiation from the first source cannot be detected by any detector of the second set and such that the radiation from the second source cannot be detected by any detector of the first set, the activation of the first and second sources may overlap and the control unit may simultaneously ascertain the level of radiation received at two detectors of the first and second sets, respectively. The radiation from the sources may for example be restricted by some physical means from illuminating certain detectors. Alternatively the radiation from the sources may for example be such that the detectors are able to distinguish between one source and another (for example by the radiation being modulated in different ways, or by the radiation having different wavelengths). The feature of enabling one or more detectors to differentiate between radiation emitted from different sources by means other than time separation may enable the time it takes the control unit to conduct a complete scan to be reduced. For example, many sources and detectors may be activated simultaneously with many different pairs of sources and detectors being checked by the control unit in parallel. As such, a larger area could be monitored by the control unit without significantly increasing the complete scan time. Also, differentiating between radiation emitted from different sources, whether by means of time separation, modulation (for example including digital encoding), wavelength or otherwise, allows the arrangement of the safety mechanism to be such that the sources and/or detectors may be placed much closer to each other than might otherwise be possible (owing to the problems that might arise with cross interference).

The detectors and sources could for example be in the form of, or be connected to, closely packed ends of fibre optic cables, each cable corresponding to a different source/detector. A curved aperture, such as may be found on a roll top desk, could for example be covered by the use of fibre optic cables and some "non-time based" form of differentiation of the radiation between sources and detectors.

A large region may be monitored by a series of self-contained, and linked, independent subsystems, each subsystem being in the form of the safety mechanism described herein. Such independent systems are preferably so arranged that they would permit simultaneous operation of sources and detectors that were not able to interfere with each other. Each sub-system could for example be physically shielded from other sub-systems or could operate on a different type of modulated radiation. Such sub-systems could be mounted on top of each other to cover a tall region. The present invention thus also provides an apparatus including a plurality of such sub-systems.

The item of furniture may be in the form of any item of furniture for use in the home or the office. The item of furniture could for example be a chest of drawers, a cupboard or a cabinet. The item of furniture may include a powered drive, such as for example an electric motor or other prime mover, for causing the movement of said one part of the furniture relative to said another part of the furniture. In such a case, the control unit may be arranged to control the powered drive. The control unit may then be able to stop movement of said one part of the furniture relative to said another part of the furniture by simply ceasing to send a signal to the drive unit. Said one part of the furniture may be a storage unit, such as for example a storage unit comprising shelves, or drawers. Said another part of the furniture may be a portion of the furniture that defines an aperture, through which the storage unit may be accessed by a user of the item of furniture. The storage unit and aperture may be so arranged that, without the benefit of the safety mechanism, there would be a risk of injury to the user as a result of the possibility of finger trap as the storage unit moves past the aperture.

The item of furniture is advantageously moveable and may be portable. For example the furniture may be arranged such that it is readily movable from one location to another without requiring any significant uninstalling or reinstallation of the furniture. The item of furniture may however be configured so that is readily moveable, but not easily lifted by hand.

The safety mechanism of the invention is preferably powered by means of a low (less than 24 Volts) power source. Preferably, the safety mechanism is powered by means of a DC power source. The power source that powers the safety mechanism may be converted from a mains AC source, for example by a suitable transformer. Preferably, however the power source is provided by a local power source (provided on or in the item of furniture). Such a local source may be in the form of an electric battery. Powering the safety mechanism by means of a source of power local to the item of furniture allows the item of furniture to be readily movable. The local power source may provide power at a higher voltage than that required by the safety mechanism. There may for example be provided a power regulator for providing a reliable smooth power source at a lower voltage than that of the primary power source that provides power to safety mechanism. Providing a regulator can allow the system to work reliably for longer when being powered by a primary power source that might otherwise be prone to voltage and/or power fluctuations. Such fluctuations are potentially detrimental because they might interfere with the intensity of light received at a detector.

Certain features of the present invention may have application in relation to detection of moving objects in general and not limited to the application of a safety mechanism for an item of furniture. For example, the safety mechanism described above with reference to the present invention could be used as a safety mechanism on dangerous machinery, or could be adapted for use within a burglar alarm. Thus the present invention further provides an apparatus for detecting the presence of an object, the apparatus comprising
i) a multiplicity of spaced-apart sources of electromagnetic radiation,
ii) a multiplicity of spaced-apart detectors, and
iii) a control unit, wherein
each source is associated with a detector,
at least one of the sources is associated with a plurality of the detectors,
at least one of the detectors is associated with a plurality of the sources,
the detectors are so arranged and configured that each detector is in use able to detect electromagnetic radiation from each of the sources with which the detector is associated,
the control unit is arranged to receive signals from the detectors, the signals depending on the electromagnetic radiation received by each detector from each of the sources with which the detector is associated, and
the control unit is arranged to provide an output signal depending on whether the control unit detects that electromagnetic radiation sent from a source to a detector associated with the source is prevented from reaching the detector, the reduced level of radiation received being sufficient to indicate the presence of an object.

Possible uses of the apparatus according to this aspect of the invention include a safety mechanism on dangerous machinery, a burglar alarm, a gaming machine, for example one involving interaction between the gaming machine and the user's body or part thereof, apparatus for detecting leaks of fluids for example in applications where dangerous chemicals might leak (the fluids being detected as they pass through the area being monitored by the apparatus).

Any of the features described above in relation to the safety mechanism of the item of furniture may be incorporated into the apparatus of this broader aspect of the present invention.

The present invention also provides a method of detecting the presence of an object within a region, comprising the steps of:
a) providing a multiplicity of spaced-apart sources of electromagnetic radiation,
b) providing a multiplicity of spaced-apart detectors,
c) sending radiation across the region from a single source to a plurality of detectors,
d) sending radiation across the region from a plurality of sources to a single detector, and
e) outputting a electronic signal indicative of the presence of an object in the region, in the event that the level of electromagnetic radiation sent from a source to a detector falls below a threshold level.

There is yet further provided a method of reducing the chance of injury to a user of an item of furniture as a result of one part of the furniture being moved relative to another part of the furniture, the method comprising the steps of performing the method of the invention described above, said region covering the area at which the parts of furniture are likely to cause injury, and wherein the outputting of an electronic signal indicative of the presence of an object in the region causes the movement of said one part of the furniture relative to said another part of the furniture to be stopped.

The present invention also provides a kit of parts comprising a multiplicity of spaced-apart sources of electromagnetic radiation, a multiplicity of spaced-apart detectors, and a control unit, wherein the kit of parts once assembled forms a safety mechanism suitable for use as the safety mechanism of the item of furniture according to invention described herein, forms the apparatus of the broader aspect of the invention described above, or is able to perform the method of the present invention.

There is also provided a control unit arranged to perform the function of the control unit as described herein.

It will also be appreciated that any of the features of the aspects of the invention mentioned may be incorporated into any of the other aspects of the invention.

By way of example, an embodiment of the present invention will now be described with reference to the accompanying schematic drawings of which:
Figure 1 shows an item of furniture including a safety mechanism, and
Figures 2 and 3 illustrate the configuration of parts of the safety mechanism of the item of furniture shown in Figure 1.

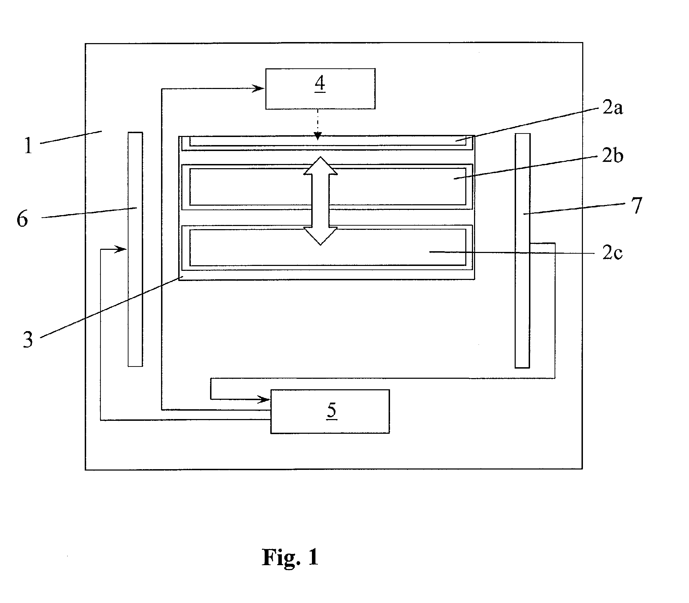

Figure 1 shows an item of furniture 1 comprising compartments 2a to 2c movable up and down within the furniture 1. The compartments 2 are driven by a motor 4 that is controlled by a control unit 5. The user is able to cause the control unit 5 to direct the motor 4 to drive the compartments 2 up or down so as to cause a given compartment 2 to be accessible through an aperture 3 in the furniture 1. The positioning of the compartments 2 relative to the aperture 3 is such that when a compartment 2 moves past the frame of the furniture 1 defining the aperture 3 there is little or no gap between the frame and the compartment 2. Thus there is a potential risk that a user of the furniture 1 could be injured if for example his/her finger were caught in between a moving compartment and the adjacent frame of the furniture 1 defining the aperture 3. In order to reduce the risk of such injury to the user there is provided a safety mechanism comprising a linear arrangement 6 of infra-red LEDs 8 positioned along and adjacent to one vertical side of the aperture 3 and a linear arrangement 7 of infra-red photo-diode sensors 9 positioned along and adjacent to the opposite vertical side of the aperture 3. The LEDs 8 and the sensors 9 are spaced apart from the aperture 3 to be monitored by the safety mechanism. The control unit 5 detects the presence of an object in the region of the aperture 3 by monitoring to check whether radiation from an LED 8 is prevented from reaching a photodiode sensor. In the event that the control unit 5 decides that a foreign object has been detected the control unit 5 causes the motor 4 driving the compartments 2 to stop their movement. The control unit 5 also controls the emission of infra-red light from the diodes to the sensors 9 as is explained in further details below. The furniture 1 is provided with a 12V battery (not shown) that powers the motor 4. A steady spike-free 5V power source is derived from the 12V battery and used to power the control unit 5, LEDs 8 and sensors 9.

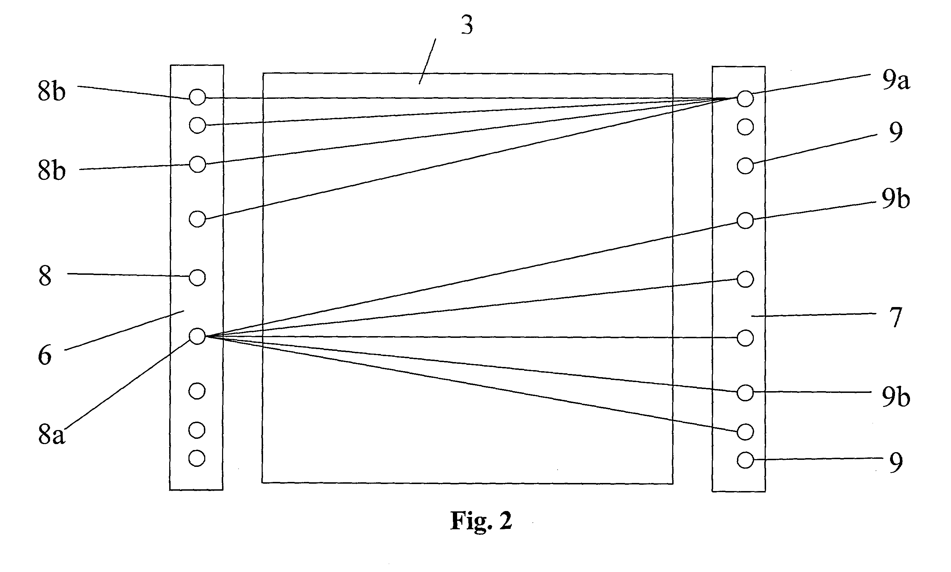

Figure 2 shows schematically the arrangements (in the form of columns) 6, 7 of the LEDs 8 and the sensors 9. Each LED 8 sends infra-red light to a plurality of sensors 9. For example, in Figure 2, the LED 8 a fourth from bottom emits radiation that is received by five sensors 9b. Also, each sensor 9 receives radiation from more than one LED. For example, in Figure 2, the uppermost sensor 9a is able to detect radiation from four LEDs 8b. Thus, there are many pairs of LEDs 8 and sensors 9 (in this case there are forty one pairs formed between nine LEDs 8 and nine sensors 9). In effect, in use there is produced a curtain of light such that if an opaque object of sufficient size interrupts the curtain light from at least one LED 8 will be prevented from reaching at least one sensor 9 with which it is paired.

The LEDs 8 and sensors 9 are arranged in two linear parallel and spaced apart columns 6, 7. However the spacing of the LEDS 8 relative to each other is not uniform, nor is spacing of the sensors 9 relative to each other. In Figure 2, there are nine LEDs 8/sensors 9 in a column 6, 7. The spacings between successive pairs in each column 6, 7 are as follows (starting from the top pair): 10mm, 20mm, 50mm, 50mm, 50mm, 50mm, 20mm, 10mm. The non-uniform spacing both reduces the number of points in the region being monitored that are covered by a plurality of LED-sensor 9 pairs (leading to unnecessary redundancy in the system) and also enable zones, in which injury is more likely to occur, to be more sensitive in terms of the size of object that would always be detected. The particular arrangement has the LEDs 8 and sources arranged such that an object having a 40mm diameter would be detected no matter where in the aperture 3 it is inserted. Because the zone in the centre of the aperture 3 is not accessible in height to very small children and has low risk of finger trap, the sensitivity of the system need not be such that it is expected to detect objects having a size of less than 40mm with 100% success rate. However, the risk of injury in the region of the upper edge and in particular the lower edge is much greater and as such the arrangement is such that the sensitivity of the system must in these areas be great enough that objects having a size of down to about 5mm are detected with 100% success rate. Differentiating between the sensitivity requirements at different zones in the region to be monitored permits cost effective coverage of a defined area by the ability to "tune" the number of receiver/detector pairs.

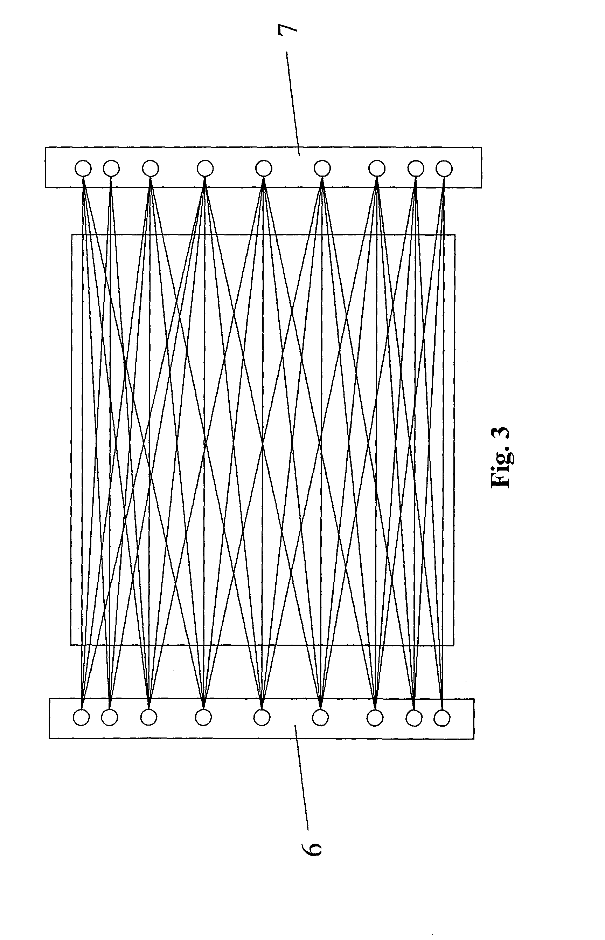

Figure 3 shows schematically the coverage provided by the light curtain that results from the arrangement shown in Figure 2. The lines between the LEDs 8 and the sensors 9 represents the notional path over which light is sent from each LED 8 to each sensor 9 with which it is associated. If an object (opaque to infrared radiation) is placed across any such path the light from an LED 8 will be prevented from reaching the associated sensor 9 and the control unit 5 will cause the motor 4, if operational, to stop driving the compartments 2. It will be seen in from Figure 3 that the gaps between paths tend to be larger in the centre and smaller at the top and bottom of the aperture 3.

The normal conical shape of the light emitted from the LEDs 8 and the normal conical field of view of the sensors 9 is restricted to avoid reflective objects on either side of the planar region being monitored reflecting light around an object in a position of potential danger (otherwise there might be a possibility of the control unit 5 failing to detect a reduced level of radiation being received by a given detector from a given sensor 9 amount and maintaining the safety screen in "safe" mode. Similarly, light must not be permitted to reflect from the upper and lower horizontal surfaces bounding the aperture 3 to effectively bypass an object at danger. This restriction is achieved by means of the provision of a lens for each LED/sensor. The lens is formed in the shape of flat arcuate "fan", in which the shape of the fan tapers to the edge of the "fan" furthest away from the LED/source, so that the edge is considerably narrower than the rest of the body of the lens. The "fan" lens is so shaped that the spread of radiation from each source, and the field of view of each sensor, is about thirty degrees within the plane on which the sensors 9 and detectors lie and is about three degrees within the plane having its normal parallel to the line of the sensors 9 (its normal also being parallel to the line of the LEDs 8).

The columns 6, 7 of the LEDs 8 and associated sensors 9 are mounted in such a way that the "flat fans" of infra-red light emitted by the LEDs 8 and the "flat fans" of the fields of view of the sensors 9 are aligned with and adjacent to the plane of the front faces of the moving compartments 2, thereby enabling detection of objects protruding out from the moving compartment (and at risk of crush or shear) as well as objects, such as hands, fingers or pan handles protruding into the protected area from outside.

The LEDs 8 are each affixed to a PCB (not shown) and are arranged in a column 6. The LEDs 8 are encased and mounted in a solid resin type moulding material that forms a structure that provides mechanical strength, electrical strength and resistance to moisture and dirt as well as reducing emissions of stray light and providing mechanical support for careless cleaning or impact with the lenses (not shown, but described above). The resin is transparent to the infra-red radiation emitted by the LEDs 8 and received by the sensors 9. The sensors 9 are arranged in a column 7 and are mounted in the same way. Each column 6, 7 includes an integral moulding that facilitates mounting in the item of furniture 1. The furniture 1 is safe to be operated by, and exposed to, humans (including young children, older infirm people and people with impaired vision) in a domestic setting.

The control unit 5 controls the movement of the compartments 2 and also provides the safety feature as will now be described in further detail. The LEDs 8 are controlled by the control unit 5 to emit infra-red light (in this case radiation having wavelengths in the region of 900 to 950nm) one at a time. The light emitted by each LED 8 is a single pulse of radiation modulated at a frequency of about 100kHz. The control unit 5 checks each sensor 9 associated with the LED 8 one at a time for the detection of infra-red light at the modulated frequency. In this way, there is resistance to false readings resulting from ambient light, stroboscopic light and fluorescent lighting. In the event that light is received at the sensor 9 at the time at which the control unit 5 checks the sensor 9 sends a positive (non-zero) signal indicating the intensity of modulated infra-red light received. If the intensity received is below a given threshold, possibly indicating the presence of an object in the aperture 3, the control unit 5 notes the potential presence of an object. If a signal is above the threshold then the control unit 5 checks the intensity of radiation received by the next sensor 9 and the process is repeated. Once all sensors 9 associated with a given LED 8 are checked, the control unit 5 causes the LED 8 to cease emitting radiation and activates the next LED. The process (of checking the relevant sensors 9) is then repeated for this next LED 8 and so on until all LEDs 8 have been activated and all sensors 9 associated with each LED 8 have been checked. The time needed to check the intensity received at a given detector from a given LED 8 is about 160 microseconds. Thus the time it takes to check all sensors 9 in respect of all LEDs 8 is less than 10 milliseconds. If the control unit 5 detects the potential presence of an object in two successive scans, then the motor 4 is caused to shut-down. By requiring two successive indications of radiation being prevented from reaching a sensor 9 in two successive scans, the potential for false alarms is reduced. Thus if an opaque object of sufficient size is inserted into the aperture 3, whilst the motor 4 is operational, the control will shut down the motor 4 within a time not greater than about 13 milliseconds. Such a reaction time is effectively immediate in human terms, and the issue of an immediate "off" command to the motor 4 significantly reduces the potential for injury from continued motion.

The control unit 5 when it detects the presence of an object also alerts the user to danger by activating alarms (not shown) that can be sensed by the user by sight, hearing and touch. The alarms include an audible alarm in the form of a ringing bell, a visual alarm in the form of a flashing light and an alarm in the form of an arm that is arranged to pop up and gently touch the user.

The control unit 5 also monitors the relative intensities of the radiation received by the sensors 9. If the control unit 5 detects that a reduced level of intensity is consistently being emitted from one or more LEDs 8 or is consistently being received by one or more sources, the reduced level being lower than the maximum expected but not low enough to be suggest the presence of an object, then the control unit 5 alerts the user to the fact that the LED(s) /sensor(s) may be faulty or in need of maintenance or cleaning. If the control unit 5 detects that the no radiation is being transmitted from one LED 8 to any source or that no radiation is being received by one source from any LED, then in addition to shutting down the motor 4 (to ensure fail-safe operation) the control unit 5 alerts the user by means of a visual or audio message that the LED 8 or source, as the case may be, may have failed (for example the LED 8 may not be emitting any radiation).

In another embodiment (not separately illustrated) there are 11 LEDs and 11 sensors arranged to monitor a region that is 400mm high. The LEDs and sensors are arranged in columns 6, 7 as described above, but the spacings and number of pairs are different as shown in the tables below:

| Sensor | Height in mm from bottom of region to sensor | Number of LEDs with which sensor is associated |
|---|---|---|
| 1 | 8 | 7 |
| 2 | 34 | 5 |
| 3 | 64 | 5 |
| 4 | 88 | 7 |
| 5 | 125 | 8 |
| 6 | 175 | 9 |
| 7 | 232 | 8 |
| 8 | 280 | 7 |
| 9 | 332 | 5 |
| 10 | 368 | 7 |
| 11 | 392 | 7 |

| LED | Height in mm from bottom of region to LED | Number of sensors with which LED is associated |
|---|---|---|
| 1 | 8 | 7 |
| 2 | 34 | 7 |
| 3 | 64 | 5 |
| 4 | 88 | 7 |
| 5 | 125 | 8 |
| 6 | 175 | 9 |
| 7 | 232 | 8 |
| 8 | 280 | 7 |
| 9 | 332 | 5 |
| 10 | 368 | 5 |
| 11 | 392 | 7 |

It will be appreciated that various modifications may be made to the above-described embodiment of the invention. By way of example, some such modifications will now be described.

The safety mechanism may of course have application in relation to fields other than safety and on or in relation to environments/objects other than furniture. For example, the system could be used as part of a burglar alarm, part of a safety system for machinery or part of a safety system for use on electric windows in cars or other vehicles.

The fan lens provided with each LED/sensor may be replaced by blinkers and shields.

The moulded resin mounting in which the LEDs/sensors are housed may be replaced by a tube of round or rectangular section, with or without clear panels for the passage of the radiation that forms the light curtain.

As can be seen from above the arrangement of LEDs and sensors need not be symmetric. For example, the number of LEDs paired with a given sensor need not be equal to the number of sensors paired with the LED at the same height as that sensor. Also, the spacing between sensors and/or the spacing between LEDs need not be symmetrical.
The region covered by the system may of course be larger than that described above. One proposed application relates to the monitoring of a region having a height greater than 500mm using more than 10 LEDs and more than 10 sensors, wherein in respect of certain zones in the region to be monitored the control unit is able to reliably detect a cylindrical object having a diameter of 4mm. The number and positioning of the LEDs and the sensors may be changed to meet the requirements of any application, of course.

## Claims

1. An item of furniture including a safety mechanism for reducing the chance of injury to a user as a result of one part of the furniture being moved relative to another part of the furniture, the safety mechanism comprising:
i) a multiplicity of spaced-apart sources of electromagnetic radiation,
ii) a multiplicity of spaced-apart detectors, and
iii) a control unit, wherein
each source is associated with a detector,
at least one of the sources is associated with a plurality of the detectors,
at least one of the detectors is associated with a plurality of the sources,
the detectors are so arranged and configured that each detector is in use able to detect electromagnetic radiation from each of the sources with which the detector is associated,
the control unit is arranged to receive signals from the detectors, the signals depending on the electromagnetic radiation received by each detector from each of the sources with which the detector is associated,
the control unit is arranged to stop movement of the said one part of the furniture relative to said another part of the furniture in the event that the control unit detects that electromagnetic radiation sent from a source to a detector associated with the source is prevented from reaching the detector, the reduced level of radiation received being sufficient to indicate the presence of an object.

2. An item of furniture according to claim 1, wherein
the safety mechanism is arranged to monitor a region for the presence of an object, the region being divided into a plurality of zones, the safety mechanism being so arranged that the minimum size of an object that the safety mechanism is configured to detect is different in different zones,
the safety mechanism is so arranged that there is a first zone in which the minimum size of an object that the safety mechanism is configured to detect is less than 10mm,
the two parts that move relative to each other are arranged to be moveable between an open position in which the parts are spaced apart to a closed position in which a portion of one of the two parts is directly adjacent to or touching a portion of the other of the two parts and
the first zone is positioned in the region of the area between said portions of the respective two parts in the closed position.

3. An item of furniture according to claim 1 or claim 2, wherein the control unit receives signals indicating the level of intensity of the radiation received by the detectors and the safety mechanism is so arranged that the control unit must receive a signal above a preset threshold level from a detector in order for the control unit to decide that there is not an object preventing radiation from reaching the detector from a source.

4. An item of furniture according to claim 3, wherein the control unit is so arranged that in the event that one or more detectors consistently detect radiation within a predetermined range of intensities the control unit outputs a signal, that in use causes the user of the item of furniture to be alerted to the reduced signal level.

5. An item of furniture as claimed in any preceding claim, wherein each pair of source and associated detector is individually calibrated to account for the variation, due to the position of the detector with respect to the source between the different pairs, of the level of radiation received from the source at the detector.

6. An item of furniture according to any preceding claim, wherein there are at least four detectors and at least four sources and the distance between respective pairs of adjacent detectors is different for at least three such pairs, and the distance between respective pairs of adjacent sources is different for at least three such pairs.

7. An item of furniture according to any preceding claim, wherein the sources are controlled by the control unit, the control unit is arranged to cause the sources to emit radiation such that for each detector only one of the sources of radiation associated with the detector emits radiation at a time, and the control unit and sources are arranged to emit radiation modulated at a frequency greater than 1kHz and the control unit is arranged such that the safety mechanism can in use discern between the modulated radiation emitted from the sources of the safety mechanism and radiation from other sources that are not so modulated.

8. An item of furniture according to any preceding claim, wherein said one part of the furniture is a storage unit and said another part of the furniture is a portion of the furniture that defines an aperture, through which the storage unit may be accessed by a user of the item of furniture.

9. An item of furniture according to any preceding claim, wherein the control unit is arranged such that in order for the control unit to decide that a reduced level of radiation received by a detector is sufficient to indicate the presence of an object, the control unit must detect a reduced level of radiation on two successive occasions within successive periods, the periods being separated in time.

10. A method of reducing the chance of injury to a user of an item of furniture as a result of one part of the furniture being moved relative to another part of the furniture, the method comprising detecting the presence of an object within a region, covering an area at which the parts of furniture are likely to cause an injury, by carrying out the following steps:
a) providing a multiplicity of spaced-apart sources of electromagnetic radiation,
b) providing a multiplicity of spaced-apart detectors,
c) sending radiation across the region from a single source to a plurality of detectors
d) sending radiation across the region from a plurality of sources to a single detector
e) outputting an electronic signal indicative of the presence of an object in the region, in the event that the level of electromagnetic radiation sent from a source to a detector falls below a threshold level.

11. A kit of parts comprising a multiplicity of spaced-apart sources of electromagnetic radiation, a multiplicity of spaced-apart detectors, and a control unit, wherein the kit of parts once assembled forms a safety mechanism suitable for use as the safety mechanism of the item of furniture according to any of claims 1 to 9, or is able to perform the method of claim 10.
